# EUROPÄISCHE PATENTSCHRIFT

(11) **EP 0 552 677 B1**
(45) Veröffentlichungstag und Bekanntmachung des Hinweises auf die Patenterteilung: **17.04.1996**
(21) Anmeldenummer: 93100549.0
(22) Anmeldetag: 15.01.1993
(51) Int. Cl.: C08L 23/10, C08J 11/06

(54) **Thermoplastische Recycling-Formmasse**
Recycled thermoplastic moulding composition
Composition à moules thermoplastique de recyclage

(30) Priorität: 24.01.1992 DE 4201845
(43) Veröffentlichungstag der Anmeldung: 28.07.1993
(73) Patentinhaber: BASF Aktiengesellschaft, D-67063 Ludwigshafen (DE)
(72) Erfinder: Weber, Martin, Dr., W-6730 Neustadt (DE); Muehlbach, Klaus, Dr., W-6718 Gruenstadt (DE); Seitz, Friedrich, Dr., W-6701 Friedelsheim (DE)

(56) Entgegenhaltungen:
- EP-A- 0 406 568
- DE-A- 3 938 552
- GB-A- 2 172 601
- US-A- 5 030 662
- DATABASE WPIL Derwent Publications Ltd., London, GB; AN 82-91863E
- CHEMISTRY &INDUSTRY Bd. 7, Nr. 15, 7. August 1989, LONDON Seiten 487 - 490 G.G.DAVID 'recovering polypropylene from waste batteries'

## Beschreibung

Die vorliegende Erfindung betrifft thermoplastische Formmassen, enthaltend
A) 35 bis 65 Gew.-% Propylenpolymerisate aus
   A₁) 0 bis 80 Gew.-% bezogen auf A), nicht regranulierten Propylenpolymerisaten und
   A₂) 20 bis 100 Gew.-% bezogen auf A), durch Zerkleinerung von Formkörpern erhaltenen regranulierten Propylenpolymerisaten
B) 10 bis 40 Gew.-% eines durch Zerkleinern von Formkörpern erhaltenen Thermoplastregranulats, enthaltend einen oder mehrere Thermoplaste aus der Gruppe der Polycarbonate, Acrylnitril-Butadien-Styrol-(ABS)-Polymerisate, Acrylnitril-Styrol-Acrylat-(ASA)-Polymerisate, Polyester und der Polyamide,
C) 10 bis 40 Gew.-% teilchenförmigen Füllstoffen oder faserförmigen Füllstoffen mit einer mittleren Faserlänge im Bereich von 50 bis 500 µm,
sowie darüber hinaus
D) 0 bis 5 Gew.-%, bezogen auf die Komponenten A bis C, mindestens einer reaktiven α,β-ungesättigten Verbindung, die neben einer Doppelbindung eine oder mehrere Carbonyl-, Carbonsäure-, Carboxylat-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen aufweisen, und
E) 0 bis 0,5 Gew.-%, bezogen auf die Komponenten A bis C, eines Radikalbildners.

Thermoplaste finden in steigendem Maße Verwendung im Automobilbau. Triebkraft dieser Entwicklung sind neben dem günstigen Rohstoffpreis vor allem die hervorragenden Verarbeitungseigenschaften sowie das breite Eigenschaftsprofil dieser Stoffklasse. Der Kunststoffanteil in Automobilen beträgt je nach Wagenklasse - und Typ zwischen 8 und 15 Gew.-% (A. Weber Kunststoffe 80, 478 (1990)).

Derzeit werden 85 % der Automobile über Shredderanlagen entsorgt; da dieses Verfahren jedoch ausschließlich der Rückgewinnung der Metallanteile dient, fallen die Kunststoffe zusammen mit Glas, Gummi und organischen Betriebsstoffen in der Fraktion der nichtmetallischen Einsatzstoffe an. Diese Fraktion macht ca. 25 % des Gewichts eines Automobils aus. Dieses Stoffgemisch wird auf Deponien entsorgt.

Vor dem Hintergrund des knapper werdenden Deponieraums und der Tatsache, daß sortenreine Thermoplaste ohne wesentlichen Qualitätsverlust in neue Gebrauchsgegenstände umgeformt werden können, sind vielfältige Aktivitäten zum Recycling der bei der Entsorgung von Automobilen anfallenden Kunststoffe unternommen worden.

In der Automobilindustrie werden neue Konstruktionskonzepte entwickelt, die es ermöglichen sollen, die Kunststoffanteile aus Altfahrzeugen möglichst schnell zu demontieren (eine Kennzeichnung der einzelnen Teile soll das Sortieren ermöglichen), so daß in den nächsten Jahren große Mengen thermoplastischer Werkstoffe zur Wiederverwertung bereitstehen werden.

Das stoffliche Recycling durch Regranulieren von sortenreinen Kunststoffen wird in der kunststoffverarbeitenden Industrie schon seit langem praktiziert - nicht den Qualitätsnormen entsprechende Formteile werden regranuliert, das so gewonnene Granulat wird in geringen Mengen zusammen mit Neumaterial verarbeitet. Auf diese Weise erhaltene Formteile entsprechen den Qualitätsnormen.

Problematischer ist das stoffliche Recycling von Mischungen aus mehreren Thermoplasten. Wie dem Fachmann bekannt ist, sind sehr viele Polymermischungen unverträglich, d.h. werden zwei unverträgliche Polymere gemischt, kommt es zu einer Phasentrennung. In den meisten Fällen ist die Haftung zwischen den Phasen sehr schlecht, so daß solche Mischungen nicht zufriedenstellende mechanische Eigenschaften aufweisen und sich nur zu Erzeugnissen verarbeiten lassen, an die keine hohen Anforderungen gestellt werden dürfen.

Im Automobilinnenbau finden vor allem Polypropylen, Acrylnitril-Butadien-Styrol-Copolymere (ABS), Acrylnitril-Styrol-Acrylester-Copolymere (ASA), Polycarbonat und Polycarbonat-Blends mit ABS und ASA aber auch Polyester und Polyamide Verwendung. Dabei machen Polypropylen und ABS den überwiegenden Teil der eingesetzten Materialien aus. Werden Granulate, die durch Zerkleinern von Formteilen der vorstehend genannten Thermoplaste erhalten wurden, in der Schmelze miteinander gemischt (schmelzecompoundiert), entstehen Formmassen, die aufgrund der Unverträglichkeit der Polymerkomponenten unbefriedigende mechanische Eigenschaften aufweisen.

Die bei der Entsorgung von Automobilen oder anderen Fahrzeugen anfallenden Thermoplaste bzw. Thermoplastmischungen können nur dann erfolgreich vermarktet werden, wenn die daraus hergestellten Formmassen wenigstens den Eigenschaften von neuwertigen Massenkunststoffen wie Polystyrol oder Polypropylen entsprechen.

Gelingt dies, könnten Recycling-Formmassen in bereits bestehenden großvolumigen Anwendungsgebieten erfolgreich mit Neumaterial in Konkurrenz treten.

In der EP-A 370 242 werden Formkörper aus aufbereiteten Kunststoffen beschrieben, die u.a. Polypropylen und ggf. weitere, regranulierte Thermoplaste enthalten können. Zur Verbesserung der Eigenschaften der Mischungen werden Fasern mit einer Länge von mindestens 6 mm (0,25 inch) zugegeben, was die Herstellung von Formkörpern aus den Massen durch übliche Compoundierung in der Schmelze praktisch unmöglich macht. Entsprechend erfolgt die Verarbeitung auch durch Entwässerung einer Mischdispersion aus Fasern und Regranulat mittels eines der Papierherstellung ähnlichen Verfahrens. Daraus ergibt sich auch, daß nicht-flächige Formkörper nur sehr eingeschränkt hergestellt werden können.

Es war daher die Aufgabe gestellt, thermoplastische Formmassen auf Basis von Polypropylen zu entwickeln, wobei die Formmasse regranulierte Thermoplaste enthalten und zufriedenstellende mechanische Eigenschaften aufweisen.

Diese Aufgabe wurde erfindungsgemäß durch die thermoplastischen Formmassen gemäß Anspruch 1 gelöst.

Als Komponente A) enthalten die erfindungsgemäßen thermoplastischen Formmassen 35 bis 65, vorzugsweise 40 bis 60 und insbesondere 45 bis 55 Gew.-%, bezogen auf das Gesamtgewicht an Propylenpolymerisaten, die sich ihrerseits zu 0 bis 80, vorzugsweise 25 bis 70 Gew.-% aus nicht regranulierten Produkten und entsprechend 20 bis 100, vorzugsweise 30 bis 75 Gew.-% aus durch Zerkleinerung von Formkörpern erhaltenem Granulat zusammensetzen.

Geeignete Propylenpolymerisate sind dem Fachmann bekannt und in der Literatur beschrieben, so daß sich hier detaillierte Angaben zur Herstellung bzw. Zusammensetzung erübrigen.

Prinzipiell eignen sich sowohl Propylenhomopolymerisate als auch Propylencopolymerisate, insbesondere sogenannte "schlagzähe Propylenpolymerisate", wie sie z.B. durch stufenweise Polymerisation nach an sich bekannten Verfahren erhältlich sind.

Beispielhaft seien hier die DE-A 40 01 157 und die DE-A 40 11 160 sowie die dort zitierten Veröffentlichungen für die Herstellung von Ethylencopolymeren genannt.

Gegenstand der DE-A 40 11 160 sind dabei Copolymerisate des Propylens mit Alk-1-enen, die durch Polymerisation von Gemischen aus Propen und den entsprechenden Alk-1-enen, vorzugsweise in der Gasphase in Abwesenheit eines flüssigen Reaktionsmediums hergestellt werden. Dabei werden die Partialdrucke von Propen und den anderen Alk-1-enen im allgemeinen innerhalb des Bereichs von 5:1 bis 100:1 gewählt.

Der Anteil an Einheiten, die sich Alk-1-enen ableiten, in so erhaltenen Propylencopolymeren liegt im allgemeinen im Bereich von 1 bis 30, vorzugsweise 2 bis 20 und insbesondere 2 bis 10 Gew.-%. Bevorzugte Alk-1-ene als Comonomere sind Ethylen und But-1-en.

In der DE-A 40 01 157 werden Propylen-Ethylen-Copolymerisate beschrieben, die nach einem zweistufigen Verfahren erhältlich sind. Dabei wird zunächst in einer ersten Stufe ein Propylenhomopolymerisat hergestellt, und anschließend in einer zweiten Stufe ein Gemisch aus Ethylen und Propylen in Anwesenheit des in der ersten Stufe hergestellten Produkts polymerisiert. Dieses Verfahren kann noch in verschiedener Weise varriert werden; wegen näherer Einzelheiten sei hier auf die DE-A 40 01 157 selbst verwiesen.

Die so erhältlichen Copolymerisate enthalten neben Blöcken von Polypropylen Blöcke von Propylen-Ethylen-Copolymerisaten mit statistischer Monomerverteilung. Diese Copolymerisate weisen im allgemeinen mittlere Molmassen von 10 000 bis 500 000 und Schmelzflußindices von 0,1 bis 100 g/10 min, vorzugsweise von 0,2 bis 10 g/10 min auf, jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Die erfindungsgemäßen Copolymerisate weisen eine ausgezeichnete Steifigkeit, eine verbesserte Rieselfähigkeit, eine den praktischen Anforderungen genügende Kerbschlagzähigkeit und eine erhöhte Schüttdichte auf. Sie enthalten nur geringe Menge an Katalysatorbestandteilen.

Der Ethylengehalt der so erhältlichen Propylencopolymerisate liegt im allgemeinen im Bereich von 2 bis 50, vorzugsweise 5 bis 30 Gew.-%, bezogen auf das Gesamtgewicht.

Bevorzugt werden Propylenhomopolymerisate bzw. Propylencopolymerisate mit untergeordneten Anteilen, im allgemeinen weniger als 10 Gew.-%, an copolymerisierten C₂-C₁₀-Alk-1-enen und einem Elastizitätsmodul von vorzugsweise 600 bis 1600 N/mm (gemessen nach DIN 53 457). Propylenpolymerisate, die als Komponente A) geeignet sind, werden z.B. unter dem Handelsnamen Novolen® von BASF Aktiengesellschaft vertrieben.

Als Komponente B) enthalten die erfindungsgemäßen Formmassen 10 bis 40, vorzugsweise 10 bis 35 Gew.-%, bezogen auf das Gesamtgewicht der Formmasse eines durch Zerkleinern von Formkörpern erhaltenen Thermoplastregranulats, enthaltend einen oder mehrere Thermoplaste aus der Gruppe der Polycarbonate, Acrylnitril-Butadien-Styrol-Polymerisate, Acrylnitril-Styrol-Acrylat-Polymerisate, die allgemein unter den Bezeichnungen ABS- oder ASA-Polymerisate bekannt sind, Polyester und der Polyamide.

Geeignete Polycarbonate sind an sich bekannt. Sie sind z.B. entsprechend den Verfahren der DE-B-13 00 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di(4-hydroxyphenyl)ethan oder 4,4-Dihydroxydimethylphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 Mol.-% der vorstehend genannten aromatischen Dihydroxyverbindungen.

Die relative Viskosität dieser Polycarbonate liegt im allgemeinen im Bereich von 1,2 bis 1,5, insbesondere von 1,28 bis 1,4 (gemessen bei 25°C in einer 0,5 gew.-%igen Lösung in Dichlormethan).

Als ABS- oder ASA-Polymerisate werden ganz allgemein Mischungen aus Pfropfpolymerisaten mit einer "weichen" Pfropfgrundlage, deren Glasübergangstemperatur (T_{g}) im Regelfall unter 10°C liegt und einer darauf aufgepfropften Hülle aus Monomeren, deren Polymerisate eine Glasübergangstemperatur von im allgemeinen mehr als 25°C aufweisen. Daneben enthalten ABS- bzw. ASA-Polymerisate im allgemeinen noch Copolymere aus den Monomeren, die die Pfropfhülle des Pfropfcopolymerisats bilden, als sog. "Hartkomponente".

ABS und ASA-Polymerisate unterscheiden sich im wesentlichen in der chemischen Zusammensetzung der Pfropfgrundlage - in ASA-Polymerisaten werden Acrylatkautschuke eingesetzt, in ABS-Polymerisaten Dienkautschuke, insbesondere auf der Basis von Butadien.

Nachfolgend seien einige bevorzugte ASA-Polymerisate etwas detaillierter beschrieben; die entsprechenden Ausführungen gelten auch für ABS-Polymerisate, wenn als Komponenten für die Pfropfgrundlage statt Acrylsäureestern Butadien oder Mischungen aus Butadien und Styrol, Acrylnitril oder kleineren Anteilen weiterer copolymerisierbarer Monomerer eingesetzt werden. Die zwingende Mitverwendung der als Vernetzer fungierenden Monomeren p₁₂ ist bei Butadienpolymerisaten nicht erforderlich, da Butadien unter geeigneten Bedingungen selbst vernetzend wirkt.

Bevorzugte ASA-Polymerisate P enthalten ein Pfropfcopolymerisat aufgebaut aus
p₁) 50 bis 90 Gew.-% einer Pfropfgrundlage auf Basis von
   p₁₁) 95 bis 99,9 Gew.-% eines C₂-C₁₀-Alkylacrylats und
   p₁₂) 0,1 bis 5 Gew.-% eines polyfunktionellen, vorzugsweise difunktionellen Monomeren mit mindestens zwei olefinischen, nicht konjugierten Doppelbindungen, und
p₂) 10 bis 50 Gew.-% einer Pfropfauflage aus
   p₂₁) 50 bis 90 Gew.-% Styrol oder substituierten Styrolen der allgemeinen Formel III oder deren Mischungen, und 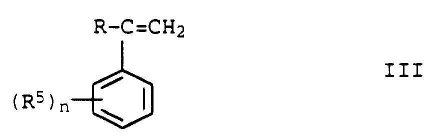 wobei R einen Alkylrest mit 1 bis 8 C-Atomen, ein Wasserstoffatom oder Halogen und R⁵ Alkylreste mit 1 bis 8 C-Atomen oder ein Halogenatom darstellen und n den Wert 0, 1, 2 oder 3 hat, und
   p₂₂) 10 bis 50 Gew.-% Acrylnitril oder Methacrylnitril oder deren Mischungen.

Bei der Komponente p₁) handelt es sich um ein Elastomeres, welches eine Glasübergangstemperatur von unter -20, insbesondere unter -30°C aufweist.

Für die Herstellung des Elastomeren werden als Hauptmonomere p₁₁) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht p₁₁ + p₁₂, eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen, bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage p₁) sind an sich bekannt und z.B. in der DE-B-12 60 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Der Anteil der Pfropfgrundlage p₁) am Pfropfpolymerisat P beträgt im allgemeinen 50 bis 90, vorzugsweise 55 bis 85 und insbesondere 60 bis 80 Gew.-%, bezogen auf das Gesamtgewicht von P.

Auf die Pfropfgrundlage p₁) ist eine Pfropfhülle p₂) aufgepfropft, die durch Copolymerisation von
p₂₁) 50 bis 90, vorzugsweise 60 bis 90 und insbesondere 65 bis 80 Gew.-% Styrol oder substituierten Styrolen der allgemeinen Formel III
   und
p₂₂) 10 bis 50, vorzugsweise 10 bis 40 und insbesondere 20 bis 35 Gew.-% Acrylnitril oder Methacrylnitril oder deren Mischungen
erhältlich ist.

Die Pfropfhülle p₂) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357, DE-OS 34 14 118 beschrieben ist.

Je nach den gewählten Bedingungen entsteht bei der Pfropfmischpolymerisation ein bestimmter Anteil an freien Copolymerisaten von Styrol und Acrylnitril.

Zum Pfropfpolymerisat P zählen im allgemeinen auch die bei der Pfropfmischpolymerisation zur Herstellung der Komponente p₂) entstehenden freien, nicht gepfropften Homo- und Copolymerisate, deren Anteil an der Komponente P von den Bedingungen bei der Herstellung der Pfropfauflage abhängt.

Nachstehend seien einige bevorzugte Pfropfpolymerisate angeführt:
p₁): 65 Gew.-% Pfropfgrundlage a₂₁) aus
   a₂₁₁) 98 Gew.-% n-Butylacrylat und
   a₂₁₂) 2 Gew.-% Dihyroxydicyclopentadienylacrylat und 35 Gew.-% Pfropfhülle a₂₂) aus
   a₂₂₁) 70 Gew.-% Styrol und
   a₂₂₂) 30 Gew.-% Acrylnitril
p₂): Pfropfgrundlage wie bei a₂₁) mit 5 Gew.-% einer Pfropfhülle aus
   a₂₂₁) Styrol (1. Pfropfstufe) und 35 Gew.-% einer zweiten Pfropfstufe aus
   a₂₂₁) 70 Gew.-% Styrol und
   a₂₂₂) 30 Gew.-% Acrylnitril
p₃): Pfropfgrundlage wie bei a₂₁) mit 13 Gew.-% einer ersten Pfropfstufe aus Styrol und 27 Gew.-% einer zweiten Pfropfstufe aus Styrol und Acrylnitril im Gewichtsverhältnis 3:1

Als Komponente P' enthalten die bevorzugten ASA-Polymerisate ein Copolymerisat aus
p'₁) 50 bis 90, vorzugsweise 55 bis 90 und insbesondere 65 bis 85 Gew.-% Styrol und/oder substituierten Styrolen der allgemeinen Formel I und
p'₂) 10 bis 50, vorzugsweise 10 bis 45 und insbesondere 15 bis 35 Gew.-% Acrylnitril und/oder Methacrylnitril.

Derartige Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50 000 bis 500 000, insbesondere von 100 000 bis 250 000.

Das Gewichtsverhältnis von Pfropfcopolymerisat P und Copolymerisat P' in den ABS- und ASA-Polymeren liegt im allgemeinen im Bereich von 20:80 bis 80:20, vorzugsweise von 30:70 bis 70:30.

ASA-Polymerisate sind unter der Bezeichnung Luran® S und ABS-Polymerisate unter der Bezeichnung Terluran® jeweils von BASF Aktiengesellschaft erhältlich.

Geeignete Polyester sind an sich bekannt und können durch Reaktion von polyesterbildenden Diolen, Dicarbonsäuren und Dicarbonsäurederivaten hergestellt werden.

Die in Betracht kommenden Diole weisen in der Regel 2 bis 10 Kohlenstoffatome auf und können sowohl linear als auch verzweigt sein. Zu dieser Gruppe von Diolen zählen Ethylenglykol, 1,3-Propandiol, 1,4-Butandiol, 1,4-Hexandiol, 1,6-Hexandiol, 1,4-Cyclohexandiol, 1,4-Di-(hydroxymethyl)cyclohexan, 2,2-Bis(4,4'-diphenylhydroxy)propan (Bisphenol A) und Neopentylglykol. Besonders bevorzugte Diole sind Ethylenglykol, 1,4-Butandiol und 1,4-Di-(hydroxymethyl)cyclohexan.

Neben Einzelverbindungen können auch Mischungen unterschiedlicher Diole sowie esterbildende Derivate derselben eingesetzt werden.

Zu den polyesterbildenden Verbindungen zählen auch aromatische sowie aliphatische Dicarbonsäuren und deren Derivate. Bevorzugte Dicarbonsäurederivate sind Dicarbonsäuredialkylester, insbesondere die Dimethylester. Die aromatischen Dicarbonsäuren bzw. deren Derivate haben vorzugsweise 8 bis 16 Kohlenstoffatome und sind beispielsweise Isophthalsäure, Terephthalsäure, substituierte Isophthalsäuren und Terephthalsäuren wie 3-t-Butylisophthalsäure oder Phenoxyterephthalsäure, mehrkernige Dicarbonsäuren, z.B. 4,4'-Diphenyldicarbonsäure, 3,3'-Diphenyldicarbonsäure, 3,3'-Diphenylmethandicarbonsäure, 4,4'-Diphenylmethandicarbonsäure, 3,3'-Diphenylsulfondicarbonsäure, 4,4'-Diphenylsulfondicarbonsäure, 1,4-Naphthalindicarbonsäure, 2,6-Naphthalindicarbonsäure, wobei Terephthalsäure besonders bevorzugt ist. Vertreter der aliphatischen Dicarbonsäuren, die in der Regel 4 bis 20 Kohlenstoffatome, vorteilhafterweise 4 bis 16 Kohlenstoffatome aufweisen, sind Adipinsäure, Suberinsäure, Azelainsäure, Sebacinsäure und 1,12-Dodecansäure. Es können auch Mischungen dieser Dicarbonsäuren bzw. deren esterbildenden Derivate eingesetzt werden.

Geeignet sind ferner thermotrope Polyester. Beispielsweise leiten sich derartige thermotrope Polyester ab von einem oder mehreren der folgenden monomeren Bausteine: p-Hydroxybenzoesäure, m-Hydroxybenzoesäure, Terephthalsäure, Isophthalsäure, Hydrochinon, Phenylhydrochinon, alkylsubstituierte Hydrochinone, insbesondere 2-Methylhydrochinon, 2-Ethylhydrochinon, 2-n-Propylhydrochinon, 2-i-Propylhydrochinon, 2-t-Butylhydrochinon, halogensubstituierte Hydrochinone, insbesondere 2-Chlorhydrochinon. Weitere Beispiele geeigneter Monomerer sind 4,4'-Dihydroxydiphenylether, 1,3-Dihydroxybenzol, 4,4'-Biphenol, 2,6,2',6'- Tetramethylbiphenol, 2,6-Dihydroxynaphthalin, 2,7-Dihydroxynaphthalin, 2,6-Naphthalindicarbonsäure, 6-Hydroxy-2-Naphthalincarbonsäure, 4,4'-Bis-(p-hydroxyphenoxy)diphenylsulfon, 2,6-Dihydroxyanthrachinon, 4,4'-Diphenyletherdicarbonsäure oder 4,4'-Dihydroxybenzophenon.

Die Herstellung der Polyester erfolgt im allgemeinen in an sich bekannter Weise durch Reaktion der Carbonsäurefunktionen mit den Hydroxyfunktionen.

Die Polyamide, die auch in den Formmassen enthalten sein können, sind ebenfalls bekannt und umfassen teilkristalline und amorphe Harze. Als Beispiele sind Polyamide zu nennen, die in den US-Patentschriften 2 071 250, 2 071 251, 2 130 523, 2 130 948, 2 241 322, 2 312 966, 2 512 606 und 3 393 210 beschrieben sind.

Die Polyamide können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren bzw. Polyaddition von entsprechenden Lactamen hergestellt werden.

Beispiele für derartige Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)methan- und Dodecandisäure.

Es ist auch möglich, Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin.

Die Herstellung derartiger teilaromatischer Copolyamide kann z.B. nach dem in den EP-A-129 195 und EP 129 196 beschriebenen Verfahren erfolgen.

Bevorzugt werden lineare Polyamide mit einem Schmelzpunkt über 200°C.

Bevorzugte Polyamide sind Polyhexamethylenadipinsäureamid, Polyhexamethylensebacinsäureamid und Polycaprolactam sowie Polyamid 6/6T und Polyamid 66/6T. Die Polyamide weisen im allgemeinen eine relative Viskosität von 2,0 bis 5 auf, bestimmt an einer 1 gew.-%igen Lösung in 96 %iger Schwefelsäure bei 23°C, was einem Molekulargewicht von etwa 15 000 bis 45 000 entspricht. Polyamide mit einer relativen Viskosität von 2,4 bis 3,5, insbesondere 2,5 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Die erfindungsgemäßen thermoplastischen Formmassen enthalten mindestens ein Thermoplastregranulat aus der Gruppe der vorstehend beschriebenen Polycarbonate, ASA-Polymerisate, ABS-Polymerisate, Polyester und der Polyamide, es können jedoch selbstverständlich Mischungen verschiedener dieser Thermoplaste bzw. Regranulate aus Blends dieser Komponenten im beliebigen Mischungsverhältnis eingesetzt werden.

Die Regranulate B) sind am einfachsten dadurch erhältlich, daß man Formkörper aus entsprechenden Thermoplasten mittels geeigneter Mahl- oder Zerkleinerungsvorrichtungen regranuliert, wobei die Partikelgrößen der Regranulate vorzugsweise so gewählt werden, daß eine gute Abmischung mit den anderen Komponenten der Formmasse möglich ist.

Als Komponente C enthalten die erfindungsgemäßen Formmassen 10 bis 40, vorzugsweise 20 bis 30 Gew.-% faser- oder teilchenförmige Füllstoffe oder deren Mischungen.

Als Beispiele für Füllstoffe seien Kohlenstoff- oder Glasfasern in Form von Glasgeweben, Glasmatten oder Glasseidenrovings, Glaskugeln sowie Wollastonit genannt, bevorzugt sind Kaliumtitanatwhisker, besonders bevorzugt Glasfasern.

Bei der Verwendung von Glasfasern können diese zur besseren Verträglichkeit mit den Blendkomponenten mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Die mittlere Länge der Glasfasern liegt im Bereich von 0,05 bis 0,5 mm, vorzugsweise von 0,08 bis 0,45 mm (im Spritzgußteil).

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (vorzugsweise kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Neben den Komponenten A bis C können die erfindungsgemäßen Formmassen 0 bis 5 Gew.-%, bezogen auf die Komponenten A bis C, mindestens einer reaktiven α,β-ungesättigten Verbindung D, die neben einer Doppelbindung eine oder mehrere Carbonyl-, Carbonsäure-, Carboxylat-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen aufweisen, enthalten. Vorzugsweise enthalten die Formmassen 0,1 bis 5 Gew.-%, insbesondere 0,1 bis 2 Gew.-%, bezogen auf die Komponenten A bis C, dieser reaktiven Verbindung.

Typisch geeignete Verbindungen sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C₁-C₁₈-Alkanolen, die Mono- oder Diamide dieser Säuren wie N-Phenylmaleinimid, Maleinsäurehydrazid.

Bevorzugt werden α,β-ungesättigte Dicarbonsäuren bzw. deren Anhydride, Di-Ester und Mono-Ester der nachstehenden allgemeinen Struktur I und II verwendet 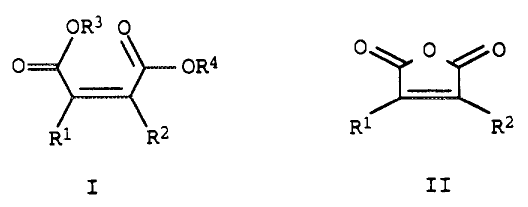 wobei
R¹, R, R³ und R⁴ unabhängig voneinander Wasserstoff sowie C₁-C₁₈-Alkyl-Gruppen sein können.

Besonders geeignete Verbindungen sind Maleinsäureanhydrid, Fumarsäure, Itaconsäure und Acrylsäure.

Enthalten die erfindungsgemäßen Formmassen die Komponente D ist es empfehlenswert einen Radikalbildner oder eine Mischung unterschiedlicher Radikalbildner zuzusetzen. Diese Komponente E kann 0 bis 0,5 Gew.-%, bezogen auf die Komponenten A bis C, betragen. Vorzugsweise wird sie in 0,01 bis 0,5, insbesondere 0,01 bis 0,3 Gew.-%, bezogen auf die Komponenten A bis C zugegeben. Als Radikalbildner können z.B. in J.K. Kochi "Free Radicals", J. Wiley-Verlag, New York 1978 beschriebenen Verbindungen dienen. Bewährt haben sich Radikalbildner mit einer Zerfallstemperatur τ_{1/2} pro Stunde von größer als 120°C, vorzugsweise von 130 bis 170°C. In Betracht kommen insbesondere Cumolhydroperoxid, Di-t-butylhydroperoxid und 2,5-Bis(t-butylperoxy)-2,5-dimethylhexan.

Werden die Komponenten D und E mitverwendet zeichnen sich die erfindungsgemäßen Formmassen dadurch aus, daß die Füllstoff-Matrix-Haftung erhöht ist, was für Produkte, die eine gute Schlagzähigkeit erfordern, von Bedeutung ist.

Neben den beschriebenen Bestandteilen A bis E können die erfindungsgemäßen Formmassen noch 0 bis 40 Gew.-%, bezogen auf die Komponenten A bis E, weiterer Additive wie Flammschutzmittel und Stabilisatoren enthalten.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, vorzugsweise Zweischneckenextruder, Brabender-Mühlen oder Banburry-Mühlen sowie Knetern mischt und anschließend extrudiert. Nach der Extrusion wird das Extrudat abgekühlt und zerkleinert.

Um eine möglichst homogene Formmasse zu erhalten, ist eine intensive Durchmischung vorteilhaft. Dazu werden im allgemeinen mittlere Mischzeiten von 0,2 bis 30 Minuten bei einer Temperatur von 220 bis 290°C, vorzugsweise 230 bis 270°C, eingehalten.

Die Reihenfolge der Mischung der Komponenten kann variiert werden, so können 2 Komponenten ggf. vorgemischt werden, es können aber auch alle Komponenten gemeinsam gemischt werden.

Bevorzugt wird insbesondere ein intensives Vormischen der Komponenten A, D und E bei Raumtemperatur in einem Fluidmischer oder einem Flügelradmischer. Die dabei erhaltene Mischung wird dann mit den übrigen Komponenten in den Einzug der vorstehend genannten Mischvorrichtung gegeben.

Die erfindungsgemäßen Formmassen zeichnen sich durch gute Steifigkeit und Zähigkeit aus, die mit denen von Propylenhomopolymerisaten vergleichbar ist.

Die thermoplastischen Formmassen können zur Herstellung von Fasern, Folien und Form Körpern verwendet werden.

### Beispiele

### Komponente a₁)

Propylenhomopolymerisat (Novolen® 1300 H der BASF Aktiengesellschaft), charakterisiert durch einen Volumenfließindex (MVI) von 2,5 bei 230°C/2,16 kg (nach DIN 53 735) und einen E-Modul von 650 N/mm (bestimmt nach DIN 53 457).

### Komponente a₂)

Polypropylenhomopolymerisat (Novolen® 1100 H der BASF Aktiengesellschaft), charakterisiert durch einen Volumenfließindex (MVI) von 2,5 bei 230°C/2,16 kg (nach DIN 53 735) und einen E-Modul von 1400 N/mm (bestimmt nach DIN 53 457).

### Komponente a₃)

Polypropylenregranulate, erhalten durch Zerkleinern von Formteilen der Komponente a₁), die 6 Monate im Freien gelagert wurden.

### Komponente a₄)

Polypropylenregranulat, erhalten durch Zerkleinern von Formteilen der Komponente a₂), die 6 Monate im Freien gelagert wurden.

### Komponente b₁)

ABS-Copolymer, enthaltend 43 Gew.-% eines Pfropfcopolymeren mit einem Polybutadienkern (60 Gew.-%) und eine darauf aufgepfropften Styrol/Acrylnitril-Hülle (40 Gew.-%; Gew. -Verh. Styrol/Acrylnitril 75:25) sowie 57 Gew.-% eines Styrol/Acrylnitril Copolymerisats mit 75 Gew.-% Styrol und 25 % Acrylnitril, charakterisiert durch einen Schmelzindex (MFI) von 8 g/10 min bei 200°C/21,6 kg (nach DIN 53 735) und einen E-Modul von 1900 N/mm (bestimmt nach DIN 53 457).

### Komponente b₂)

ABS-Regranulat, erhalten durch Zerkleinern von Formteilen der Komponente b₁, die 6 Monate im Freien gelagert wurden, charakterisiert durch einen Schmelzindex (MFI) von 11 g/10 min bei 200°C/21,6 kg (nach DIN 53 735).

### Komponente b₃)

ASA-Copolymer, enthaltend 42 Gew.-% eines Pfropfcopolymeren mit 60 Gew.-% einer Pfropfgrundlage aus 98 Gew.-% n-Butylacrylat und 2 Gew.-% eines polyfunktionellen Monomeren (Dihydrodicyclopentadienyldiacrylat) und 40 Gew.-% einer darauf aufgepfropften Mischung aus Styrol und Acrylnitril im Gew.-Verh. 75/25 sowie 58 Gew.-% eines Styrol/Acrylnitril (75/25 Gew.-Verh.)-Copolymerisats, charakterisiert durch einen Schmelzindex (MFI) von 8 g/10 min bei 200°C/21,6 kg (nach DIN 53 735) und einen E-Modul von 2300 N/mm (bestimmt nach DIN 53 457).

### Komponente b₄)

ASA-Regranulat, erhalten durch Zerkleinern von Formteilen, die mindestens 6 Monate gebrauchsmäßigen Belastungen ausgesetzt waren, charakterisiert durch einen Schmelzindex (MFI) von 10 g/10 min bei 200°C/21,6 kg (nach DIN 53 735).

### Komponente b₅)

Polycarbonat/ABS-Blend (60 Gew.-% Lexan® 161 der Fa. General Electric/40 Gew.-% der Komponente b₁), charakterisiert durch einen Volumenfließindex (MVI) von 12 ml/10 min bei 260°C/5 kg (nach DIN 53 735) und einen E-Modul von 2300 N/mm (bestimmt nach DIN 53 457).

### Komponente b₆)

Polycarbonat/ABS-Regranulat, erhalten durch Zerkleinern von Formteilen, die mindestens 6 Monate gebrauchsmäßigen Belastungen ausgesetzt waren, charakterisiert durch einen Volumenfließindex (MVI) von 15 ml/10 min bei 260°C/5 kg (nach DIN 53 735) und einen E-Modul von 2300 N/mm (bestimmt nach DIN 53 457).

### Komponente b₇)

Polycarbonat/ASA-Blend (60 Gew.-% Lexan® 161 der Fa. General Electric, 40 Gew.-% der Komponente b₃), charakterisiert durch einen Volumenfließindex (MVI) von 12 ml/10 min bei 260°C/5 kg (nach DIN 53 735) und einen E-Modul von 2300 N/mm (bestimmt nach DIN 53 457).

### Komponente b₈)

Polycarbonat/ASA-Regranulat, erhalten durch Zerkleinern von Formteilen, die mindestens 6 Monate gebrauchsmäßigen Belastungen ausgesetzt waren, charakterisiert durch einen Volumenfließindex (MVI) von 14 ml/10 min bei 260°C/5 kg (nach DIN 53 735) und einen E-Modul von 2400 N/mm (bestimmt nach DIN 53 457).

### Komponente c₁)

Glasfaserrovings mit einer Aminosilanschlichte und einer Dicke von 10 µm.

### Komponente c₂)

Schnittglasfaser mit einer Aminosilanschlichte und mittleren Stapellänge von 4 bis 8 mm.

### Komponente d)

Als Komponente d wurde Maleinsäureanhydrid verwendet.

### Komponente e)

Als Radikalbildner e wurde 2,5-Bis(t-butylperoxy)-2,5-dimethylhexan verwendet.

### Anwendungstechnische Prüfungen

Die Vicat-Erweichungstemperatur (T_{Vicat B}) wurde nach DIN 53 460, mit einer Kraft von 49,05 N und einer Temperatursteigerung von 50 K je Stunde, an Normkleinstäben bestimmt.

Der Elastizitätsmodul (E) wurde nach DIN 53 457 an Schulterstäben geprüft, mit Prüfkörpern des gleichen Typs wurde auch die Zugfestigkeit (σ_{B}) und die Reißdehnung (ε_{R}) nach DIN 53 455 bestimmt.

Die Schlagbiegefestigkeit (aₖ) wurde an Normkleinstäben nach DIN 53 453 bestimmt.

Die Fließfähigkeit (MVI) wurde nach DIN 53 735 bei 260°C/10 kg bestimmt.

Herstellung der Formmassen, die die Komponenten D und E nicht enthalten.

Die Bestandteile wurden in einem Zweiwellenextruder bei einer Massetemperatur von 250 bis 270°C gemischt. Dabei wurden die Polymergranulate in den Einzug des Extruders dosiert und die Komponenten c₁) und c₂) im zweiten Drittel der Extruderstrecke zudosiert. Die Schmelze wurde in ein Wasserbad geleitet und granuliert. Das getrocknete Granulat wurde bei 250 bis 270°C zu Schulterstäben und Normkleinstäben verarbeitet.

Die Zusammensetzung der Formmassen und Ergebnisse der Messungen sind in den Tabellen 1 bis 3 aufgeführt.

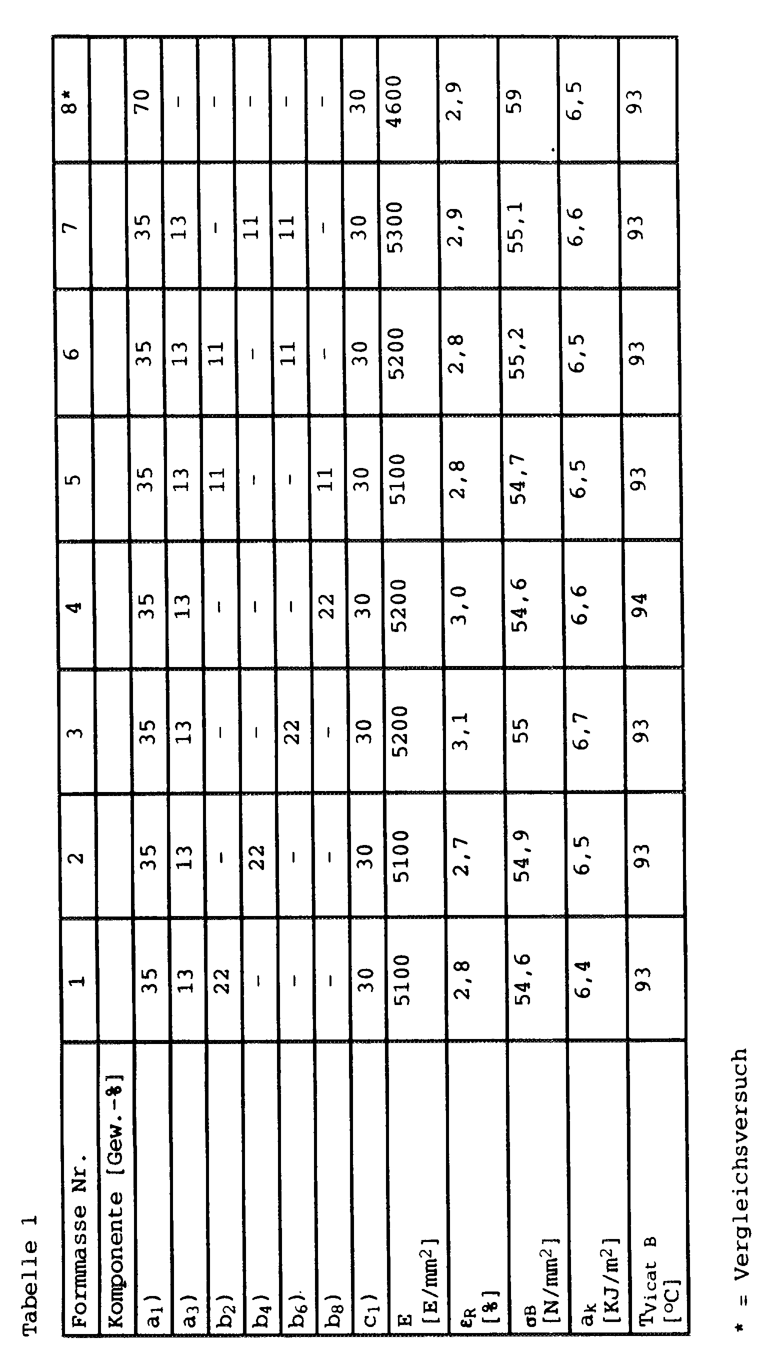

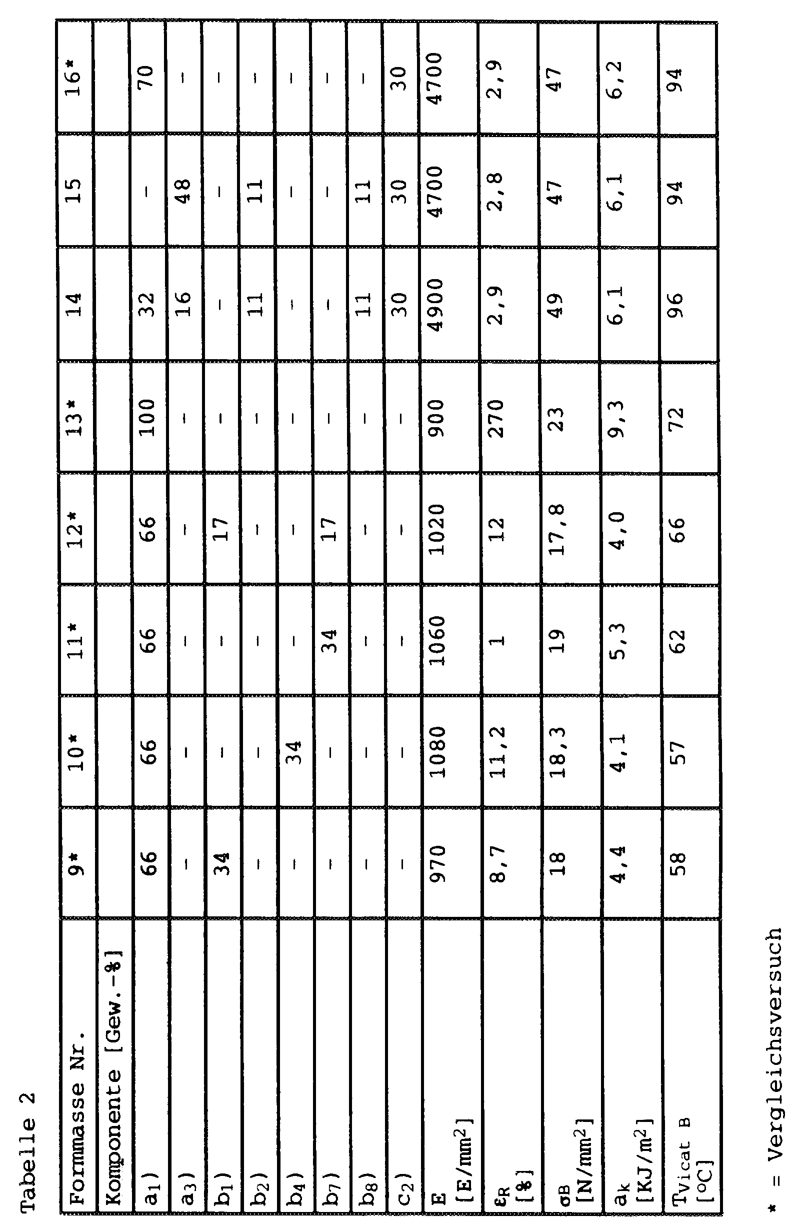

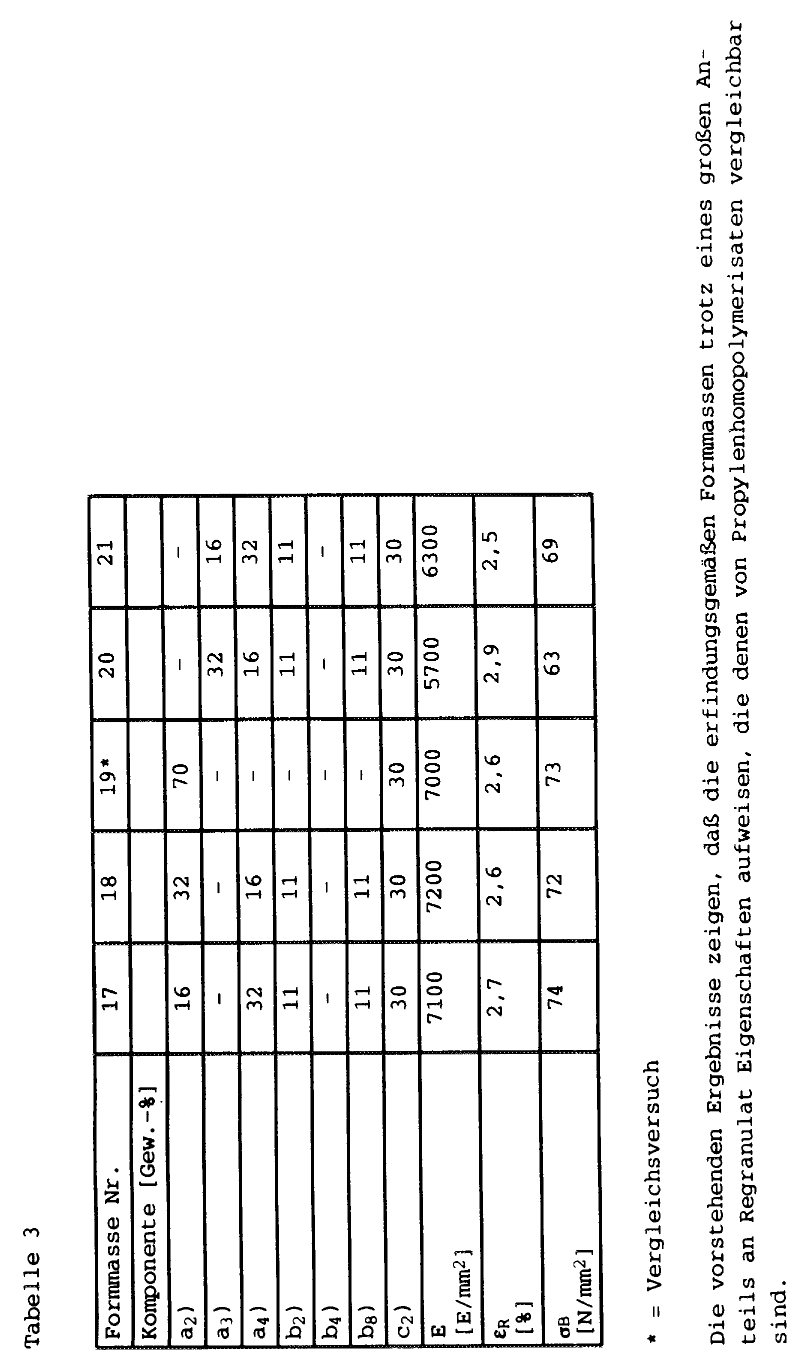

Herstellung der Formmassen, die die Komponenten D und E enthalten.

Die Bestandteile wurden in einem Zweiwellenextruder bei einer Massetemperatur von 230 bis 270°C gemischt. Dabei wurden die Komponenten a, b, d und e in den Einzug des Extruders dosiert und die Komponenten c₁ und c₂ im zweiten Drittel der Extruderschnecke zudosiert. Die Schmelze wurde in ein Wasserbad geleitet und granuliert. Das getrocknete Granulat wurde bei 230 bis 270°C zu Schulterstäben und Normkleinstäben verarbeitet.

Die Zusammensetzungen der Formmassen und Ergebnisse der Messungen sind in Tabelle 4 aufgeführt.

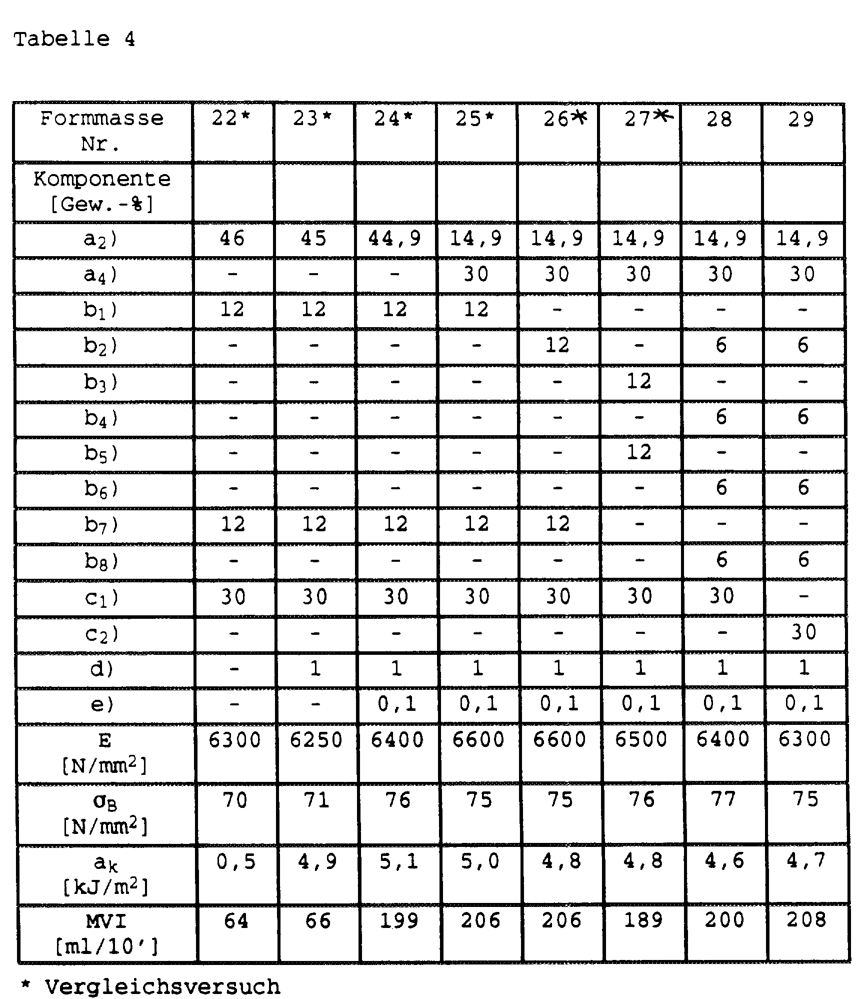

Die vorstehenden Ergebnisse zeigen, daß die erfindungsgemäßen Formmassen, die die Komponenten D und E enthalten, bei vergleichbaren Elastizitätsmodulwerten, erhöhte Zugfestigkeiten und Fließfähigkeiten gegenüber den Formmassen, die diese Komponenten nicht enthalten, aufweisen.

## Patentansprüche

1. Thermoplastische Formmassen, enthaltend
A) 35 bis 65 Gew.-% Propylenpolymerisate aus
A₁) 0 bis 80 Gew.-% bezogen auf A), nicht regranulierten Propylenpolymerisaten und
A₂) 20 bis 100 Gew.-% bezogen auf A), durch Zerkleinerung von Formkörpern erhaltenen regranulierten Propylenpolymerisaten
B) 10 bis 40 Gew.-% eines durch Zerkleinern von Formkörpern erhaltenen Thermoplastregranulats, enthaltend einen oder mehrere Thermoplaste aus der Gruppe der Polycarbonate, Acrylnitril-Butadien-Styrol-(ABS)-Polymerisate, Acrylnitril-Styrol-Acrylat-(ASA)-Polymerisate, Polyester und der Polyamide,
C) 10 bis 40 Gew.-% teilchenförmigen Füllstoffen oder faserförmigen Füllstoffen mit einer mittleren Faserlänge im Bereich von 50 bis 500 µm,
sowie darüber hinaus
D) 0 bis 5 Gew.-%, bezogen auf die Komponenten A bis C, mindestens einer reaktiven α,β-ungesättigten Verbindung, die neben einer Doppelbindung eine oder mehrere Carbonyl-, Carbonsäure-, Carboxylat-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen aufweisen, und
E) 0 bis 0,5 Gew.-%, bezogen auf die Komponenten A bis C, eines Radikalbildners.

2. Thermoplastische Formmassen nach Anspruch 1, dadurch gekennzeichnet, daß sie als Komponente A₁) und/oder A₂) Propylenhomopolymerisate enthalten.

3. Thermoplastische Formmassen nach Anspruch 1 oder 2, in denen als Komponente D 0,1 bis 5 Gew.-%, bezogen auf die Komponenten A bis C mindestens einer olefinisch ungesättigten Carbonylverbindung und als Komponente E 0,01 bis 0,5 Gew.-%, bezogen auf die Komponenten A bis C, eines Radikalbildners verwendet werden.

4. Thermoplastische Formmassen nach einem der Ansprüche 1 bis 3, in denen als Komponente D Verbindungen der allgemeinen Struktur I oder II 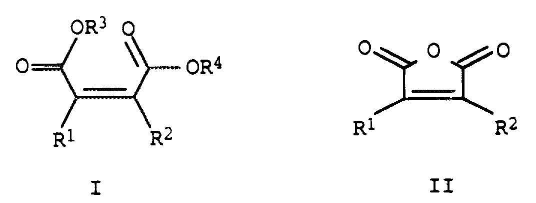 wobei R¹, R, R³ und R⁴ unabhängig voneinander Wasserstoff oder C₁ bis C₁₈-Alkyl bedeuten kann, verwendet werden.

5. Verwendung der thermoplastischen Formmassen gemäß Anspruch 1 oder 2 zur Herstellung von Fasern, Folien und Formkörpern.

6. Formkörper aus thermoplastischen Formmassen gemäß Anspruch 1 oder 2.

## Claims

1. A thermoplastic molding material containing
A) 35 to 65% by weight of propylene polymers of
A₁) 0 to 80% by weight, based on A), of non-regranulated propylene polymers, and
A₂) 20 to 100% by weight, based on A), of regranulated propylene polymers obtained by comminution of moldings,
B) 10 to 40% by weight of a thermoplastic regranulate obtained by comminution of moldings, containing one or more thermoplastics from the group comprising polycarbonates, acrylonitrile-butadiene-styrene (ABS) polymers, acrylonitrile-styrene-acrylate (ASA) polymers, polyesters and polyamides,
C) 10 to 40% by weight of particulate fillers or fibrous fillers having a mean fiber length in the range from 50 to 500 µm,
and in addition
D) 0 to 5% by weight, based on the components A to C, of at least one reactive α,β-unsaturated compound which contains, in addition to a double bond, one or more carbonyl, carboxylic acid, carboxylate, acid anhydride, acid amide, acid imide, carboxylic acid ester, amino, hydroxyl, epoxy, oxazoline, urethane, urea, lactam or halobenzyl groups, and
E) 0 to 0.5% by weight, based on the components A to C, of a free radical initiator.

2. A thermoplastic molding material as claimed in claim 1, which contains, as component A₁) and/or A₂), propylene homopolymers.

3. A thermoplastic molding material as claimed in claim 1 or 2, in which as component D there is used 0.1 to 5% by weight, based on the components A to C, of at least one olefinically unsaturated carbonyl compound, and as component E there is used 0.01 to 0.5% by weight, based on the components A to C, of a free radical initiator.

4. A thermoplastic molding material as claimed in any of claims 1 to 3, in which as component D there are used compounds of the general structure I or II 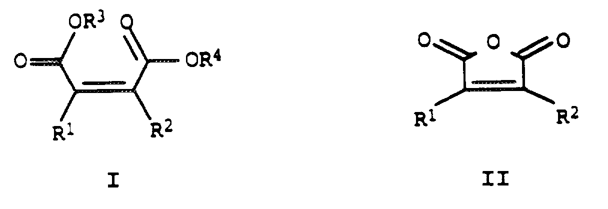 where
R¹, R, R³ and R⁴ may, independently of one another, be hydrogen or C₁-C₁₈-alkyl.

5. The use of a thermoplastic molding material as claimed in claim 1 or 2 for the production of fibers, films and moldings.

6. A molding produced from a thermoplastic molding material as claimed in claim 1 or 2.

## Revendications

1. Masses à mouler thermoplastiques, contenant
A) 35 à 65% en poids de polymères de propylène se composant de
A₁) 0 à 80% en poids, par rapport à A), de polymères de propylène non regranulés et de
A₂) 20 à 100% en poids, par rapport à A), de polymères de propylène regranulés, obtenus par broyage de corps moulés,
B) 10 à 40% en poids d'un produit de regranulation de matière thermoplastique obtenu par broyage de corps moulés, contenant une ou plusieurs matières thermoplastiques du groupe des polycarbonates, des polymères acrylonitrile/butadiène/styrène (ABS), des polymères acrylonitrile/styrène/acrylate (ASA), des polyesters et des polyamides,
C) 10 à 40% en poids de charges particulaires ou de charges fibreuses ayant une longueur moyenne de fibres comprise entre 50 et 500 µm,
ainsi que
D) 0 à 5% en poids, par rapport aux composants A) à C), d'au moins un composé α,β-insaturé réactif qui comporte, en plus d'une double liaison, un ou plusieurs groupements carbonyle, acide carboxylique, carboxylate, anhydride d'acide, amide d'acide, imide d'acide, ester d'acide carboxylique, amino, hydroxy, époxy, oxazoline, uréthanne, urée, lactame ou halogénobenzyle, et
E) 0 à 0,5% en poids, par rapport aux composants A) à C), d'un générateur de radicaux.

2. Masses à mouler thermoplastiques selon la revendication 1, caractérisées en ce qu'elles contiennent des homopolymères de propylène en tant que composants A₁) et/ou A₂).

3. Masses à mouler thermoplastiques selon la revendication 1 ou 2, dans lesquelles il est utilisé, comme composant D), 0,1 à 5% en poids, par rapport aux composants A) à C), d'au moins un composé carbonyle à insaturation oléfinique et, comme composant E), 0,01 à 0,5% en poids, par rapport aux composants A) à C), d'un générateur de radicaux.

4. Masses à mouler thermoplastiques selon l'une quelconque des revendications 1 à 3, dans lesquelles il est utilisé, comme composant D), des composés de structure générale I ou II 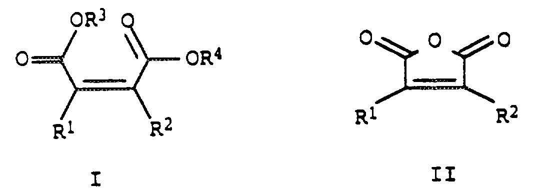 R¹, R, R³ et R⁴ pouvant représenter chacun, indépendamment les uns des autres, des atomes d'hydrogène ou des groupements alkyle en C₁-C₁₈.

5. Utilisation des masses à mouler thermoplastiques selon la revendication 1 ou 2, pour la fabrication de fibres, de feuilles et de corps moulés.

6. Corps moulés en masses à mouler thermoplastiques selon la revendication 1 ou 2.
